# FASCICULE DE BREVET EUROPEEN

(11) **EP 1 527 671 B1**
(45) Date de publication et mention de la délivrance du brevet: **09.12.2015**
(21) Numéro de dépôt: 04292487.8
(22) Date de dépôt: 20.10.2004
(51) Int. Cl.: A01D 34/86

(54) **Machine de coupe ou de broyage de végétaux, adaptable sur véhicule automoteur du genre tracteur**
Mäher oder Häcksler, der an einem selbstfahrenden traktorartigen Fahrzeug anbringbar ist
Mower or shredder to be mounted on a self-propelled vehicle of tractor type

(30) Priorité: 29.10.2003 FR 0312657
(43) Date de publication de la demande: 04.05.2005
(73) Titulaire: Noremat, 54710 Ludres (FR)
(72) Inventeur: Bayle, Christrian, 69250 Neuville-sur-Saône (FR)
(74) Mandataire: Abello, Michel

(56) Documents cités:
- EP-A- 1 297 732
- FR-A- 2 701 627
- US-A- 4 426 829
- US-A- 5 396 754

## Description

L'invention est relative à une machine de coupe ou de broyage de végétaux adaptable sur véhicule automoteur du genre tracteur, notamment pour l'entretien des espaces verts, talus et accotements.

Des machines connues sous le nom de faucheuses-débroussailleuses comportent généralement un bras articulé destiné à porter un ensemble comportant un rotor tournant à grande vitesse. Ce rotor tournant comporte des fléaux ou outils analogues de broyage de la végétation ou des taillis.

Ces machines connues sont montées fixes ou sur l'attelage trois points d'un tracteur ou véhicule analogue, à partir duquel on anime le dispositif par énergie hydraulique agissant sur des vérins de déplacement en translation et un moteur hydraulique d'entraînement en rotation du rotor.

Dans un premier type de machine connue, le bras portant le rotor comporte trois membres articulés perpendiculairement l'un à l'autre de manière à porter le rotor en avant de la roue arrière du tracteur et à débattre sur une zone de travail de largeur réduite correspondant à un mouvement alternatif du membre de bras portant le rotor dans un plan perpendiculaire à l'axe longitudinal du tracteur.

Dans un deuxième type de machine connue, le bras portant le rotor comporte au moins deux membres articulés l'un à l'autre dans le même plan vertical. Le bras articulé est monté sur un pivot situé en arrière de la roue arrière du tracteur adjacente à la zone de travail. Cette zone de travail du rotor, correspondant à un quart de cercle dont le centre est situé en arrière du tracteur, est plus importante que la zone de travail de la première machine connue.

Ce deuxième type présente toutefois le grave inconvénient suivant : pour surveiller le travail du rotor, le conducteur du tracteur est constamment tourné vers l'arrière, cette position entraînant une fatigue importante diminuant l'attention du conducteur et entraînant des accidents.

En outre, ces deux machines connues comportent des articulations ou des pivots fixés directement derrière la roue arrière adjacente à la zone de travail : cette mauvaise répartition des masses implique une dégradation de la stabilité du tracteur et entraîne un risque de basculement.

Dans le document FR 2 701 627, on propose de remédier à ces inconvénients et de réunir les avantages ergonométriques et de visibilité des machines à déplacement latéral à la maniabilité des machines à pivot de l'art antérieur, tout en améliorant les caractéristiques de stabilité du tracteur portant le dispositif et en respectant le gabarit routier en position de transport.

Le document FR 2 701 627 décrit un dispositif adaptable sur véhicule automoteur à roues du genre tracteur, notamment pour l'entretien des espaces verts, talus et accotements, du type comportant un châssis sur lequel est monté à pivotement autour d'un axe sensiblement vertical un bras porteur d'un ensemble-rotor, dans lequel le bras comporte un membre porteur de l'ensemble-rotor présentant une conformation déviée vers l'avant, et dans lequel l'axe de pivotement est situé du côté de l'axe longitudinal du véhicule opposé à la zone de travail de l'ensemble-rotor.

Cependant ce troisième type de machine décrite dans le document FR 2 701 627 présente l'inconvénient d'une envergure ou portée de travail limitée par la nécessité de rester compatible avec les normes de gabarit routier en position de transport.

En outre, toutes les têtes ou rotors des machines connues présentent l'inconvénient commun de ne pas suivre les irrégularités du terrain ou de la masse de végétaux à travailler. Cette impossibilité de suivi automatique impose par conséquent au conducteur une vigilance constante et une fatigue supplémentaire.

L'invention a pour but de remédier aux inconvénients de la technique connue, en proposant une nouvelle machine présentant une ergonomie améliorée et une envergure ou portée de travail augmentée, tout en satisfaisant aux normes de gabarit routier en position de transport.

L'invention a pour objet une machine de coupe ou de broyage de végétaux selon la revendication 1.

Selon d'autres caractéristiques alternatives de l'invention :
- la deuxième partie peut constituer un fourreau de coulissement et la troisième partie peut constituer un coulisseau.
- selon une variante, la deuxième partie peut constituer un coulisseau et la troisième partie peut constituer un fourreau de coulissement.
- les deuxième et troisième parties peuvent constituer un bras télescopique.
- la première partie du bras et la dernière partie portant un rotor ou tête de travail sont sensiblement parallèles ; de manière à orienter le rotor ou tête de travail selon un plan de travail sensiblement parallèle au plan du compas formé par la première et la deuxième partie du bras.
- ledit coulissement relatif peut être commandé par un vérin à double effet apte à être bloqué, pour forcer une tête de travail ou rotor à suivre un mouvement imposé par le déplacement du véhicule automoteur.

L'invention sera mieux comprise grâce à la description qui va suivre donnée à titre d'exemple non limitatif en référence aux dessins annexés dans lesquels :
- La figure 1 représente schématiquement une vue en perspective arrière droite d'une machine selon l'invention, attelée à un véhicule automoteur, en position de transport.
- La figure 2 représente schématiquement une vue en perspective latérale avant droite d'une machine selon l'invention, attelée à un véhicule automoteur, dans une première position de travail.
- La figure 3 représente schématiquement une vue en perspective latérale arrière droite d'une machine selon l'invention, attelée à un véhicule automoteur, dans une deuxième position de travail.

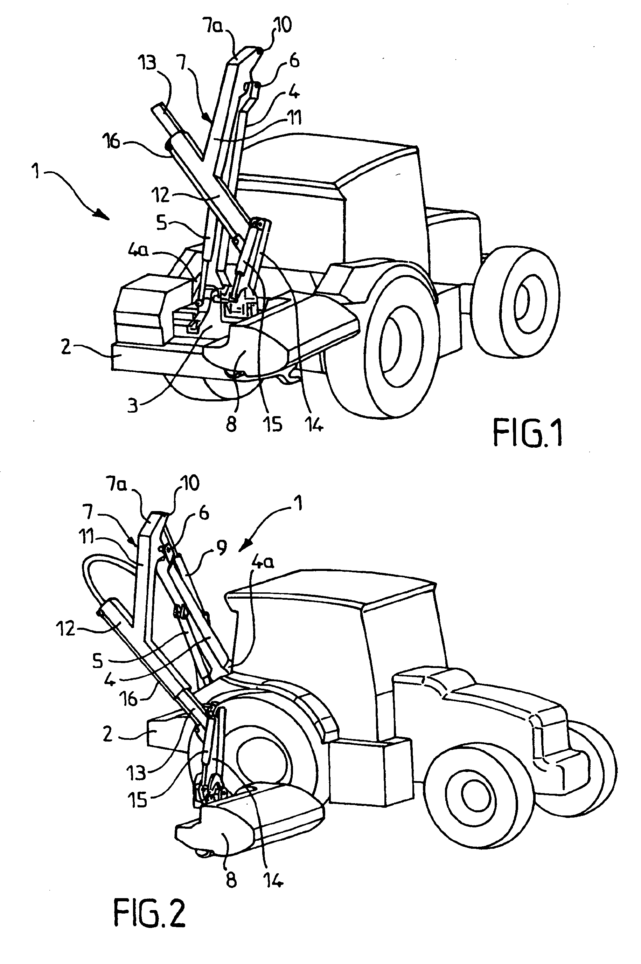

En référence aux figures 1 à 3, les éléments identiques ou fonctionnellement équivalents sont repérés par des chiffres de référence identiques.

Sur la figure 1, un véhicule automoteur, par exemple du genre tracteur, porte une machine 1 selon l'invention attelée à l'arrière du tracteur, par exemple à un attelage trois points.

La machine 1 comporte un châssis 2 de support comportant un bloc 3 tournant autour d'un axe vertical, dont le pivotement est commandé de manière connue par un actionneur ou vérin hydraulique prenant appui sur le châssis 2.

Le bloc tournant 3 reçoit à articulation autour d'un axe horizontal l'extrémité 4a en forme de fourche d'un membre rectiligne 4 dont l'inclinaison est commandée par un vérin hydraulique 5 prenant appui sur le bloc tournant 3.

A son extrémité éloignée du bloc tournant 3, le membre rectiligne 4 comporte une autre extrémité 4b en forme de fourche recevant à articulation autour d'un axe horizontal 6, un membre 7 de support d'une tête de travail ou rotor 8.

L'articulation entre le premier membre 4 et le deuxième membre 7 correspond à l'ouverture et à la fermeture d'un compas 4-7 commandé par un vérin hydraulique 9 monté sur le membre rectiligne 4 pour actionner l'extrémité 7a dépassante du membre 7 par l'intermédiaire de l'axe horizontal 10.

Le membre 7 portant le rotor ou tête 8 de travail présente une conformation déviée vers l'avant et comporte quatre parties : une première partie 11 coplanaire avec le membre rectiligne 4, une deuxième partie 12 formant un angle obtus d'environ 135° avec la première partie 11, une troisième partie 13 apte à coulisser par rapport à la deuxième partie 12 et une quatrième partie 14 formant un angle obtus d'environ 135° avec la troisième partie 13.

Les première et deuxième parties 11 et 12 sont reliées rigidement l'une à l'autre et de préférence fabriquées d'un seul tenant par mécanosoudage de profilés ou de tôles métalliques.

Les troisième et quatrième parties 13 et 14 sont reliées rigidement l'une à l'autre et de préférence fabriquées d'un seul tenant par mécanosoudage de profilés ou de tôles métalliques.

Le rotor ou tête 8 de travail est monté sur la quatrième partie 14 avec possibilité d'inclinaison commandable par un vérin hydraulique 15, de manière à travailler parallèlement au sol ou à la pente d'un talus, ou encore verticalement dans le cas d'un débroussaillage.

Avantageusement, les première et quatrième parties 11 et 14 sont sensiblement parallèles entre elles, de sorte que l'ouverture ou la fermeture du compas 4-7 provoque le déplacement de la quatrième partie 14 et du rotor 8 dans un plan vertical parallèle au plan vertical 4-11 contenant les vérins 5 et 9.

Le mouvement de coulissement relatif des deuxième et troisième parties 12 et 13 est commandé par un vérin latéral 16 monté sur la deuxième partie 12 et actionnant un gousset solidaire de la quatrième partie 14 relié rigidement à la troisième partie 13.

La configuration de transport de la figure 1 permet le déplacement sur route en respectant les normes imposées par le gabarit routier, grâce au coulissement en position rentrée du coulisseau 13 dans la deuxième partie 12 tubulaire.

Sur la figure 2, une première position de travail vers l'avant est obtenue avec un coulissement notable du coulisseau 13 vers l'avant, de manière à permettre un fauchage ou un broyage légèrement en avant de la grande roue du tracteur agricole, en maintenant le rotor ou la tête de travail 8 dans sa position de plus grande largeur frontale de travail.

Dans cette position, la hauteur de travail du rotor ou tête 8 de travail est définie par la grande roue arrière du tracteur ou par le déplacement du tracteur, de sorte que le vérin 16 à double effet peut être bloqué en position au cours du travail, de manière à maintenir une hauteur de coupe sensiblement constante par rapport au sol, dans le cas d'un terrain sensiblement plat.

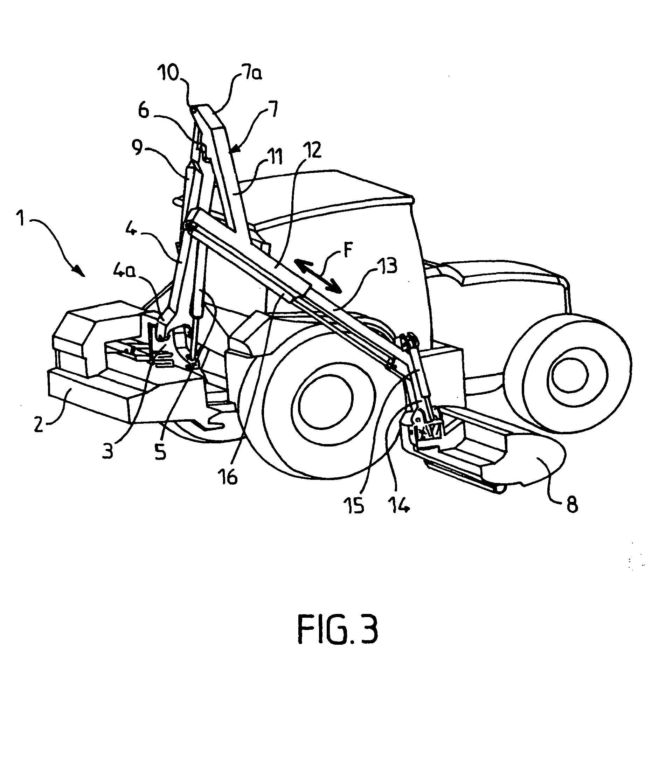

Sur la figure 3, une deuxième position de travail vers l'avant est obtenue avec un coulissement maximal du coulisseau 13 vers l'avant, de manière à augmenter la portée de travail de la machine selon l'invention grâce à l'extension du vérin 16.

Dans cette position, il est avantageux de rendre le vérin 16 flottant autour de sa position de travail en mettant en communication les chambres du vérin 16 avec des volumes sans pression, par exemple avec un retour au réservoir de fluide hydraulique.

Cette libération a pour effet de rendre la tête 8 de travail ou rotor 8 adaptable au terrain : en présence d'un obstacle, la réaction du rotor 8 ou tête de travail provoque la rentrée du coulisseau 13 et assure simultanément la levée de la tête 8 de travail par dessus cet obstacle ; tandis que, dans le cas d'un creux ou d'une dépression, le poids propre du rotor 8 ou tête de travail provoque la sortie du coulisseau 13 et assure simultanément la descente de la tête 8 de travail vers le fond du creux ou de la dépression.

Cet effet de suivi flottant schématisé par la flèche F est dû à l'orientation du bras télescopique ou ensemble coulissant constitué par la coopération des deuxième et troisième parties 12 et 13.

Cette orientation correspond à une direction possédant à la fois une composante vers le bras et une composante sensiblement voisine de la direction d'avancement du tracteur agricole ou du véhicule automoteur portant la machine selon l'invention, au contraire des machines de l'art antérieur pouvant comporter un bras télescopique orienté radialement ou dans un plan radial tel que le plan 4-7 et ne possédant de ce fait aucun effet adaptatif permettant d'avaler les sinuosités de l'espace de travail.

L'invention décrite en référence à un mode de réalisation particulier n'y est nullement limitée, mais couvre au contraire toute modification de forme et toute variante de réalisation de l'invention objet des revendications annexées.

## Revendications

1. Machine (1) de coupe ou de broyage de végétaux, adaptable sur un véhicule automoteur, du type comportant un châssis (2) supportant un bras en deux membres (4,7) articulés à la manière d'un compas et portant une tête de travail (8),
ledit bras présentant deux angles obtus voisins de 135° d'angle, dans laquelle les deux membres (4, 7) sont respectivement un membre pivotant (4), par l'intermédiaire duquel le bras est supporté par le châssis (2), et un membre (7) de support de tête de travail (8), le membre pivotant (4) étant apte à pivoter autour d'un axe vertical (3) sur le châssis (2),
dans laquelle le membre (7) de support de tête de travail (8) comporte une première partie (11) reliée rigidement à une deuxième partie (12) formant un angle obtus d'environ 135° avec ladite première partie (11), et, une quatrième partie (14) formant un angle obtus d'environ 135° avec une troisième partie (13),
le bras étant mobile entre une position compacte de transport sur route et une position déployée de travail,
et dans laquelle dans la position compacte de transport sur route, le compas est dans une position fermée et la deuxième partie (12) présente une orientation sensiblement latérale par rapport à la direction d'avancement du véhicule, et dans la position déployée de travail, le bras est dévié vers l'avant et l'orientation de la deuxième partie (12) possède une composante vers le bas et une composante sensiblement voisine de la direction d'avancement du véhicule automoteur, **caractérisée par le fait que** le membre (7) de support de tête de travail (8) comporte en outre ladite troisième partie (13) entre la deuxième partie (12) et la quatrième partie (14), reliée rigidement à la quatrième partie (14), la troisième partie (13) étant apte à coulisser par rapport à la deuxième partie (12) selon l'orientation de la deuxième partie (12),
la troisième partie (19) étant dans une position rentrée par rapport à la deuxième partie (12), lorsque le bras est en position compacte de transport sur route, et dans une position étendue par rapport à la deuxième partie, (12) lorsque le bras est dans la position déployée de travail,
et **par le fait que** la troisième partie (13) est apte à coulisser par rapport à la deuxième partie (12) de manière flottante dans la position de travail pour permettre à la tête (8) de travail de suivre le contour d'un espace de travail.

2. Machine (1) selon la revendication 1, **caractérisée par le fait que** le coulissement entre la deuxième partie et la troisième partie (13) est commandé par un vérin à double effet, la troisième partie (13) étant apte à coulisser par rapport à la deuxième partie (12) de manière flottante par la libération du vérin à double effet.

3. Machine selon la revendication 1 ou 2, **caractérisée par le fait que** la deuxième partie (12) constitue un fourreau de coulissement et la troisième partie (13) constitue un coulisseau.

4. Machine selon la revendication 1 ou 2, **caractérisée par le fait que** la deuxième partie (12) constitue un coulisseau et la troisième partie (13) constitue un fourreau de coulissement.

5. Machine selon l'une quelconque des revendications 1 à 4, **caractérisée par le fait que** les deuxième (12) et troisième (13) parties constituent un bras télescopique.

6. Machine selon l'une quelconque des revendications 1 à 5, **caractérisée par le fait que** la première partie (11) du bras et la dernière partie (14) portant la tête de travail sont sensiblement parallèles ; de manière à orienter la tête de travail selon un plan de travail sensiblement parallèle au plan du compas (4-7) d'articulation du bras.

7. Machine (1) selon la revendication 1, ou 2, **caractérisé par le fait que** le coulissement entre la deuxième partie (12) et la troisième partie (13) est commandé par un vérin à double effet apte à être bloqué, pour forcer la tête (8) de travail à suivre un mouvement imposé par le déplacement du véhicule automoteur.

## Patentansprüche

1. Maschine (1) zum Zerschneiden oder Häckseln von Pflanzen, welche an einem selbstfahrenden Fahrzeug anbringbar ist, des Typs umfassend ein Gestell (2), welches einen Arm aus zwei Gliedern (4, 7) trägt, welche zirkelartig gelenkig sind und einen Arbeitskopf (8) tragen, wobei der Arm zwei benachbarte stumpfe Winkel von 135° aufweist,
wobei beide Glieder (4, 7) jeweils ein Schwenkglied (4), durch das der Arm von dem Gestell (2) getragen wird, und ein Glied (7) zum Tragen des Arbeitskopfs (8) sind, wobei das Schwenkglied (4) um ein vertikales Achsmittel (3) an dem Gestell (2) schwenkbar ist,
wobei das Glied (7) zum Tragen des Arbeitskopfs (8) einen ersten Teil (11) umfasst, welcher mit einem zweiten Teil (12) starr verbunden ist, der mit dem ersten Teil (11) einen stumpfen Winkel von ungefähr 135° bildet, und einen vierten Teil (14), der mit einem dritten Teil (13) einen stumpfen Winkel von ungefähr 135° bildet,
wobei der Arm zwischen einer kompakten Straßentransportposition und einer entfalteten Arbeitsposition beweglich ist,
und wobei in der kompakten Straßentransportposition der Zirkel in einer geschlossenen Position ist und der zweite Teil (12) eine Orientierung aufweist, welche gegenüber der Vorwärtsrichtung des Fahrzeuges im Wesentlichen seitlich ist, und in der entfalteten Arbeitsposition der Arm in einer Vorwärtsrichtung abgelenkt wird und die Orientierung des zweiten Teils (12) eine nach abwärts gerichtete Komponente und eine der Vorwärtsrichtung des selbstfahrenden Fahrzeuges im Wesentlichen angenäherte Komponente aufweist,
**dadurch gekennzeichnet, dass** das Glied (7) zum Tragen des Arbeitskopfs (8) zwischen dem zweiten Teil (12) und dem vierten Teil (14) zudem den dritten Teil (13) umfasst, welcher mit dem vierten Teil (14) starr verbunden ist, wobei der dritte Teil (13) gegenüber dem zweiten Teil (12) entsprechend der Orientierung des zweiten Teils (12) verschiebbar ist,
wobei der dritte Teil (13) sich in einer gegenüber dem zweiten Teil (12) eingezogenen Position befindet, wenn der Arm in der kompakten Straßentransportposition ist, und in einer gegenüber dem zweiten Teil (12) ausgezogenen Position, wenn der Arm in der entfalteten Arbeitsposition ist,
weiterhin **dadurch gekennzeichnet, dass** der dritte Teil (13) in der Arbeitsposition gegenüber dem zweiten Teil (12) schwimmend verschiebbar ist, um dem Arbeitskopf (8) zu ermöglichen, der Kontur eines Arbeitsraums zu folgen.

2. Maschine (1) gemäß Anspruch 1, **dadurch gekennzeichnet, dass** das Verschieben zwischen dem zweiten Teil und dem dritten Teil (1 3) über einen doppeltwirkenden Zylinder gesteuert wird, wobei der dritte Teil (13) durch die Freigabe des doppeltwirkenden Zylinders gegenüber dem zweiten Teil (12) schwimmend verschiebbar ist.

3. Maschine gemäß Anspruch 1 oder 2, **dadurch gekennzeichnet, dass** der zweite Teil (12) eine Schiebehülse und der dritte Teil (13) einen Schieber darstellt.

4. Maschine gemäß Anspruch 1 oder 2, **dadurch gekennzeichnet, dass** der zweite Teil (12) einen Schieber und der dritte Teil (13) eine Schiebehülse darstellt.

5. Maschine gemäß einem der Ansprüche 1 bis 4, **dadurch gekennzeichnet, dass** der zweite Teil (12) und der dritte Teil (13) einen Teleskoparm darstellen.

6. Maschine gemäß einem der Ansprüche 1 bis 5, **dadurch gekennzeichnet, dass** der erste Teil (11) des Arms und der letzte Teil (14), der den Arbeitskopf trägt, im Wesentlichen parallel sind, um den Arbeitskopf in einer zu der Zirkelebene (4-7) des Armgelenks im Wesentlichen parallelen Arbeitsebene zu orientieren.

7. Maschine (1) gemäß Anspruch 1, oder 2, **dadurch gekennzeichnet, dass** das Verschieben zwischen dem zweiten Teil (12) und dem dritten Teil (13) über einen doppeltwirkenden Zylinder gesteuert wird, welcher blockierbar ist, um den Arbeitskopf (8) zu zwingen, einer Bewegung zu folgen, welche durch die Bewegung des selbstfahrenden Fahrzeuges vorgegeben wird.

## Claims

1. Machine (1) for cutting or shredding plants, adaptable to a self-propelling vehicle, of the type comprising a chassis (2) supporting an arm with two limbs (4, 7) articulated in the manner of a compass and bearing a workhead (8),
said arm having two obtuse angles of nearby 135° of angle, wherein the two limbs (4, 7) are, respectively, a pivoting limb (4), through which the arm is supported by the chassis (2), and a limb (7) for supporting the workhead (8), the pivoting limb (4) being able to rotate around a vertical axis (3) on the chassis (2),
wherein the limb (7) for supporting the workhead (8) comprises a first part (11) rigidly linked to a second part (12) forming an obtuse angle of approximately 135° with said first part (11), and, a fourth part (14) forming an obtuse angle of approximately 135° with a third part (13),
the arm being able to move between a compact road transportation position and a deployed working position,
and wherein, in the compact road transportation position, the compass is in a closed position and the second part (12) has a positioning that is substantially lateral relative to the direction of travel of the vehicle and, in the deployed working position, the arm is diverted towards the front and the positioning of the second part (12) has a component towards the rear and a component substantially adjacent to the direction of travel of the self-propelling vehicle,
**characterised by** the fact that the limb (7) for supporting the workhead (8) furthermore comprises said third part (13) between the second part (12) and the fourth part (14), linked rigidly to the fourth part (14), the third part (13) being capable of sliding relative to the second part (12) according to the positioning of the second part (12),
the third part (13) being in a retracted position relative to the second part (12) when the arm is in the compact road transportation position, and in an extended position relative to the second part (12) when the arm is in the deployed working position,
and by the fact that the third part (13) is capable of sliding relative to the second part (12) in a floating manner in the working position so as to enable the workhead (8) to follow the outline of a work space.

2. Machine (1) according to claim 1, **characterised by** the fact that the sliding between the second part and the third part (13) is controlled by a double-action cylinder, the third part (13) being capable of sliding relative to the second part (12) in a floating manner by releasing the double-action cylinder.

3. Machine according to claim 1 or 2, **characterised by** the fact that the second part (12) forms a sliding sheath and the third part (13) forms a slide block.

4. Machine according to claim 1 or 2, **characterised by** the fact that the second part (12) forms a slide block and the third part (13) forms a sliding sheath.

5. Machine according to any one of claims 1 to 4, **characterised by** the fact that the second (12) and third (13) parts form a telescopic arm.

6. Machine according to any one of claims 1 to 5, **characterised by** the fact that the first part (11) of the arm and the final part (14) bearing the workhead are substantially parallel, in such a way as to position the workhead according to a work plane that is substantially parallel to the plane of the articulating compass (4 to 7) of the arm.

7. Machine (1) according to claim 1 or 2, **characterised by** the fact that the sliding between the second part (12) and the third part (13) is controlled by a double-action cylinder that is capable of being blocked, so as to force the workhead (8) to follow a movement imposed by the displacement of the self-propelling vehicle.
